Europäisches Patentamt

(19) European Patent Office

Office européen des brevets

(11) Publication number : **0 246 043 B1**

## (12) EUROPEAN PATENT SPECIFICATION

(45) Date of publication of patent specification :
**27.05.92 Bulletin 92/22**

(51) Int. Cl.⁵ : **F16L 58/16**

(21) Application number : **87304127.1**

(22) Date of filing : **08.05.87**

(54) Method of applying a wrapping.

(30) Priority : **13.05.86 GB 8611682**

(43) Date of publication of application :
**19.11.87 Bulletin 87/47**

(45) Publication of the grant of the patent :
**27.05.92 Bulletin 92/22**

(84) Designated Contracting States :
**AT BE CH DE ES FR IT LI NL SE**

(56) References cited :
**EP-A- 0 169 691**
**DE-A- 1 750 304**
**DE-A- 3 002 263**
**DE-C- 1 771 764**
**GB-A- 1 414 059**
**US-A- 4 225 370**

(73) Proprietor : **W.R. GRACE LIMITED**
**Northdale House North Circular Road**
**London NW10 7UH (GB)**

(72) Inventor : **Wingfield, Keith Anthony**
**Draycott Packhorse Road**
**Gerrards Cross Buckinghamshire SL9 8HU**
**(GB)**

(74) Representative : **Senior, Alan Murray et al**
**J.A. KEMP & CO 14 South Square Gray's Inn**
**London WC1R 5EU (GB)**

Jouve, 18, rue Saint-Denis, 75001 PARIS

EP 0 246 043 B1

## Description

This invention relates to protecting pipes such a subterranean, submarine or surface pipelines for carrying oil and gas.

It is well known to protect steel pipes by providing coatings and claddings thereon. These may be partly factory applied, for instance pipes may be protected with epoxy layers, polyethylene or enamels in the factory and they may be additionally or alternatively applied in the field, for instance concrete claddings are applied to submarine pipes to cause them to sink and it is also known to provide helical wrappings at the point of use. A particular type of protection which is applied on site is that applied in the region of welds formed between adjacent lengths of pipe. Such welds are protected when the pipeline is initially laid. Also during pipeline refurbishment, which is necessary after a number of years of use, pipes may be exposed and inspected and need to be reprotected thereafter.

With regard to wrappings applied on site, the art includes wrappings which may be applied by being wound helically along a length of pipe and also includes wrappings applied in spiral form at a point, for instance to cover a particular weld. Reference is made to European Patent Application 0 169 691 which discloses a method of ayplying a wrapping in either helical or spiral form under tension wherein the wrapping comprises a substrate with a membrane of a self-adhesive compound on the one side and successive lengths of the wrappings are joined together by the substrates being directly bonded without the intervention of the adhesive which, were it to carry the tensional forces, would slip and allow the tension of the wrapping to be released. A similar arrangement is possible for spiral wrappings wherein the last applied end of the wrapping is free from adhesive, allowing the projecting adhesive-free substrate to be directly bonded to the underlying exterior facing turn of substrate, thereby locking the wrapping in place with its tension maintained.

Heat shrinkable wrappings are also known in the art. They have been available in sleeve form for many years and have been used to cover welded joints but in that event have the disadvantage that they need to be threaded on the pipe before the weld is made, subsequently moved to overlie the weld and then heat treated so as to shrink down into contact with and to protect the weld. More recently, similar heat shrinkable materials have been used to provide wraparound protection for instance for welded joints. A lap joint is made in the heat shrinkable material and this may for instance be covered by a further section of material secured by hot melt adhesive and the whole is heated so as severely to shrink it into a tight fit around the joint.

De-A- 3 002 263 shows a wrapping which has been tensioned during the manufacture and stored in its tensioned state, and which will contact once wrapped on an article.

According to the present invention, there is provided a method of applying a wrapping, comprising a substrate of plastic sheet material and a membrane of a self-adhesive compound, onto an elongate article such as a pipeline by tightly applying the wrapping to the article and locking the wrapping, such that it is unable longitudinally to shorten, wherein at least the substrate of the wrapping is tensioned prior to application and the plastic is allowed to contract and thus tighten the wrapping upon the article under ambient conditions wherein the wrapping is applied spirally, with a first turn overlapped by a second turn or a part thereof, and the last applied end of the wrapping is bonded to the part of the wrapping which it overlies by means of a separate patch of the substrate material being bonded to said end and said part, the wrapping being applied as a single turn lapped for a short length.

With the invention the wrapping is tensioned prior to application, applied spirally with a small lap and secured by a patch. The wrapping tends to contract tightly contacting the pipe.

An extension of the plastic substrate sheet prior to application can be performed when it is heated above ambient temperature, for instance immediately after it has been extruded or at some other convenient time e.g. just before coating with adhesive. In a preferred arrangement, the sheet is then subject to cooling so that the extension is securely maintained. Cold extension may be used instead. Thus stretching may occur either before or after the plastic substrate is attached to the self-adhesive membrane. The material will be supplied in roll form to the point of use and once applied will contract against the longitudinal restraint and thereby tighten itself around the pipe. These materials are in any event compliant and it has been found that the tension induced as a result of the present invention ensures that all gaps are securely closed, even in refurbishment situations of the type where the wrapping may straddle across a weld and cover the ends of existing pre-applied protection on either side of the weld, which has not been removed, such pre-applied protection often being several millimeters thick.

The plastics sheet substrate material is preferably polyvinyl chloride. Many types of p.v.c. may be useful depending on the conditions of manufacture and intended end-use. It is expected that a well plasticised p.v.c. will be most appropriate. A plasticised p.v.c. containing a polymer such as natural or synthetic rubber, polyethylene or urethane elastomer may be an appropriate way of adding the ambient temperature shrinkage properties. Other types of sheet material may be appropriate or developed to be appropriate in the future.

The extension can be effected in a drawing operation wherein the plastic sheet passes through successive pairs of nip rollers, the surface speed of the downstream pair of which is greater than that of the upstream pair. Subsequent to that, air cooling can take place. In the drawing operation there will be transverse shrinkage so that when the wrapping is applied to a pipeline and allowed to contract it will not, at that point, undergo any further transverse shrinkage.

Normally, the wrapping will be provided with a removable protective covering in the form of a siliconised paper.

The material of the self-adhesive compound is self-adhesive at ambient temperature so as to stick to a pipe without the aid of heat or solvent and the layer of adhesive may be reinforced and is typically bituminous, often a bituminous rubber compound with the rubber being natural or synthetic. A release sheet, typically of siliconised paper, will normally be provided between adjacent turns in the stored rolls of wrapping of the invention, to be removed on application and use.

Preferably, the plastic support sheet is at least 30-50 and preferably 40, thousandths of an inch thick (0.75 to 1.25, preferably 1 mm) and preferably the adhesive is from 30 to 50 thousandths of an inch thick (0.75 to 1.25 mm) again preferably 1 mm. The width of the wrapping will suit the application concerned, for instance the wrapping may be slightly wider than the width of the bare metal at the weld so as to overlap the exposed ends of the factory applied coating. The length of each wrapping will suit the diameter of the pipe to be protected, with a single turn lapped for a short length.

The invention allows fast and simple manual application requiring only unskilled labour but nevertheless offering all the advantages normally associated with heat shrunk wrappings without the difficulties of effecting such heat shrinkage. Moreover, it can be compatible with and have excellent adhesion characteristics with respect to epoxy, polyethylene, enamel and other coatings presently found on pipelines.

The invention involves "locking" the wrapping against longitudinal shortening so that it tightens on the pipe. The substrate of the last applied part of the wrapping is bonded by the patch of substrate material to the substrate of the previously applied part bonding procedure.

The substrate to substrate bonding, between the patch and the substrate, can be effected in various ways. The way selected will generally depend upon the particular substrate in the wrapping material. The presently contemplated methods include high frequency welding, heat bonding brought about by application of hot air or a heated surface such as the surface of a heated pad, solvent welding, ultrasonic welding and the use of an adhesive. Solvent welding is preferred, in particular for a substrate of polyvinylchloride. Heated pads may be obtained from Radyne Limited.

By solvent welding we mean welding brought about by the surface of at least one of the substrate and the patch being treated with solvent and the surfaces than being brought together. When the solvent flashes off the bond between the surfaces remains, making them, in a sense integral with each other.

Thus in the case of solvent welding or use of an adhesive, the solvent adhesive is applied onto the patch and/or the area immediately beneath it making sure the total coverage occurs, and the patch is then immediately pressed down and air excluded by wiping, and surplus solvent or adhesive will be wiped off. With the high frequency, ultrasonic or heat welding possibilities, the bonding will again take place shortly after the adhesive of each length contacts the pipe. It is preferred to use solvent welding and for the solvents to be supplied in an aerosol can or compressible tube and these appear to be the quickest and most convenient ways of applying it.

To assist in understanding the invention, the following further description is given by way of example only, with reference to the accompany drawings, in which:

Figure 1 is a schematic longitudinal cross sectional view of a region of connection between two lengths of a pipeline with a wrapping of the invention applied thereto,

Figure 2 is a transverse cross section of the Figure 1 arrangement.

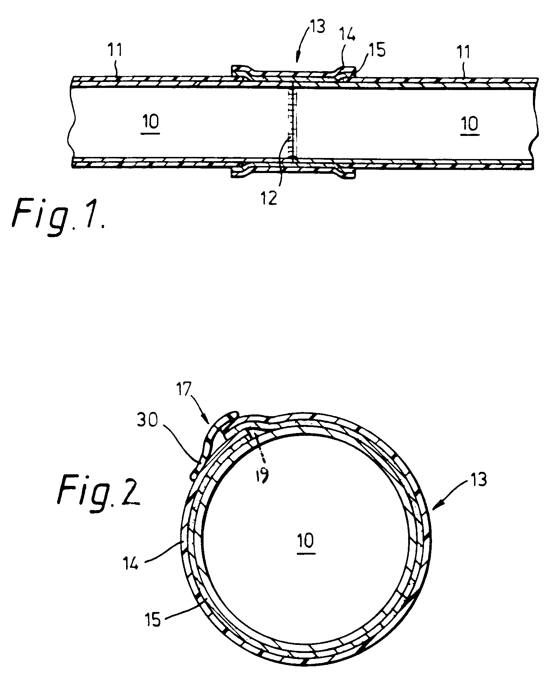

In Figure 1 two lengths of pipe 10 are welded together at 12, each being provided with a permanent coating 11 which does not extend right up to the weld. The area between the ends of the coatings 11 and covering and including the weld needs to be protected by a wrapping, illustrated at 13 which is in accordance with the invention and which comprises a plastic substrate 14 and a self-adhesive compound layer 15 in contact with the pipe and overlapping the upstanding edges of the coating 11. After application, which is performed with the wrapping under tension, so that it is tightly applied, the plastic substrate 14 contracts and the wrapping is pulled more tightly into engagement with the pipe and tightly around the edge of the coating 11 so much so that all gaps are closed, even where the end of the coating meets the outer surface of the pipe.

Figure 2 illustrates how an appropriate length of the wrapping 13 can be applied around a pipe or pipes shown at 10 such that an end of the wrapping overlaps a first applied end thereof to be adhered thereto. In order to lock the wrapping against longitudinal shortening and maintain tension, with the result that shrinkage necessarily leads to increased tightening of the wrapping around the pipe, a separate patch 30 of substrate material is the directly bonded both onto the substrate of the exposed end 17 of the wrapping and onto the previously applied substrate adjacent thereto.

To assist in use of the wrappings of the invention it may be appropriate to prime the surface to be protected prior to application of the wrapping. An additional possibility, particularly where there is a step or discontinuity in the smoothness of the surface to be covered, e.g. at the junctions between bare metal and a factory applied coating, or at a longitudinal pipe-forming weld, is to apply a narrow filling strip, typically of bituminous adhesive of a conformable texture having a thin flexible support. This is applied in the region of the step so as to fill any such gap which might otherwise be present in the initial stages of contraction of the wrapping. Additionally, such a strip could be used at the end of the wrapping, for instance in the gap shown, on an enlarged scale, at 19 in Figure 2.

## Claims

1. A method of applying a wrapping, comprising a substrate of plastic sheet material and a membrane of a self-adhesive compound, onto an elongate article such as a pipeline by tightly applying the wrapping to the article and locking the wrapping, such that it is unable longitudinally to shorten, wherein at least the substrate of the wrapping is tensioned prior to application and the plastic is allowed to contract and thus tighten the wrapping upon the article under ambient conditions wherein the wrapping is applied spirally, with a first turn overlapped by a second turn or a part thereof, and the last applied end of the wrapping is bonded to the part of the wrapping which it overlies by means of a separate patch of the substrate material being bonded to said end and said part, the wrapping being applied as a single turn lapped for a short length.

2. A method according to claim 1 characterised in that the bonding is heat bonding, by high frequency welding, by means of an adhesive, or by ultrasonic welding.

3. A method according to claim 1 characterised in that the bonding is by solvent welding, and in that the solvent is preferably applied by an aerosol or compressible tube.

## Patentansprüche

1. Verfahren zum Anbringen einer Umhüllung, die ein Substrat aus Kunststoffolienmaterial und eine Membran aus einer selbstklebenden Verbindung umfaßt, auf einem länglichen Gegenstand wie einer Pipeline durch festes Anbringen der Umhüllung auf dem Gegenstand und Arretieren der Umhüllung, so daß sie nicht in der Lage ist, sich in Längsrichtung zu verkürzen, bei dem zumindest das Substrat der Umhüllung vor der Anwendung gespannt, der Kunststoff sich zusammenziehen gelassen und dadurch die Umhüllung auf dem Gegenstand unter Umgebungsbedingungen fest angebracht wird, die Umhüllung wendelförmig angebracht wird, wobei eine erste Wicklung von einer zweiten Wicklung oder einem Teil derselben überlappt wird, und das zuletzt angebrachte Ende der Umhüllung mit dem Teil der Umhüllung verbunden wird, auf dem es aufliegt, indem ein separates Stück des Substratmaterials mit diesem Ende und diesem Teil verbunden wird, wobei die Umhüllung in Form einer einzigen Wicklung mit geringer Überlappung angebracht wird.

2. Verfahren nach Anspruch 1, **dadurch gekennzeichnet,** daß das Verbinden ein Heißverbinden ist und durch Hochfrequenzschweißen, einen Klebstoff oder Ultraschallschweißen erfolgt.

3. Verfahren nach Anspruch 1, **dadurch gekennzeichnet,** daß das Verbinden durch Lösungsmittelschweißen erfolgt und das Lösungsmittel vorzugsweise durch ein Aerosol oder eine zusammenpreßbare Tube aufgebracht wird.

## Revendications

1. Procédé d'application d'une enveloppe, comprenant un substrat en matière plastique formant feuille et une membrane d'un composé auto-adhésif, sur un élément allongé tel qu'un pipeline en appliquant de manière serrée l'enveloppe sur l'élément et en bloquant l'enveloppe pour qu'elle ne puisse pas raccourcir longitudinalement, dans lequel au moins le substrat de l'enveloppe est mis sous tension avant l'application et où le plastique peut se contracter et ainsi serrer l'enveloppe sur l'élément dans des conditions ambiantes, dans lequel l'enveloppe est appliquée en spirale, un premier tour étant chevauché par un second tour ou une partie de celui-ci, et l'extrémité appliquée en dernier de l'enveloppe est reliée à une partie de l'enveloppe qu'elle recouvre au moyen d'une pièce séparée de la matière formant substrat qui est reliée à ladite extrémité et à ladite partie, l'enveloppe étant appliquée sous la forme d'un seul tour en chevauchement sur une longueur réduite.

2. Procédé selon la revendication 1, caractérisé en ce que la liaison est une liaison par la chaleur, par une soudure à haute fréquence, au moyen d'un agent adhésif, ou par une soudure par ultrasons.

3. Procédé selon la revendication 1, caractérisé en ce que la liaison est effectuée par une soudure par solvant, et en ce que le solvant est appliqué de préférence par un aérosol ou un tube compressible.

Fig.1.

Fig.2